# EUROPEAN PATENT SPECIFICATION

(11) **EP 4 032 811 B1**
(45) Date of publication and mention of the grant of the patent: **05.03.2025**
(21) Application number: 21186951.6
(22) Date of filing: 21.07.2021
(51) Int. Cl.: B64D 27/24, B64D 37/30, B64C 23/06, B60L 50/70, B64D 3/00, B64D 1/10, B64D 1/12, H01M 8/00, B60L 58/40, B64D 41/00, B60L 50/71

(54) **AIRCRAFT PROPULSION MODULE AND AIRCRAFT**
FLUGZEUGANTRIEBSMODUL UND FLUGZEUG
MODULE DE PROPULSION D'AÉRONEF ET AÉRONEF

(30) Priority: 22.01.2021 EP 21153046
(43) Date of publication of application: 27.07.2022
(73) Proprietor: Blue Spirit Aero SAS, 92500 Rueil-Malmaison (FR)
(72) Inventor: VINCEKOVIC, David, Woodville, SA 5011 (AU); PASQUIET, Florian, 30650 Richefort du Gard (FR); SAVIN, Olivier, 92500 Rueil-Malmaison (FR)
(74) Representative: Schulze, Mark

(56) References cited:
- WO-A1-2019/241581
- WO-A1-2020/003181
- WO-A1-2020/060488
- DE-U1- 202016 006 522
- FR-A1- 3 097 201
- US-A1- 2008 261 084

## Description

The present invention relates to an aircraft propulsion module comprising a hydrogen storage system, at least one electrochemical converter connected to the hydrogen storage system, wherein the at least one electrochemical converter is adapted to convert hydrogen supplied from the hydrogen storage system into electric energy, and at least one electric motor electrically connected to the at least one electrochemical converter, wherein the electric motor is adapted to generate thrust. The present invention also relates to an aircraft comprising at least one such propulsion module. The present invention further relates to a method of operating such a propulsion module.

In the context of aviation, modules may be defined as airborne equipment anchored to a dedicated point on the aircraft's structure. Mainly used in the military field, they can provide different functions such as extension of the fuel capacity or weapons and external sensors carriage. On the Clip-Air project, presented by the École Poly technique Fédérale de Lausanne in June 2013, modules could even represent independent cabins to transport passengers.

It is further known from the prior art to provide "electro-propulsive modules" distributed along a wingspan of an aircraft wing wherein the propulsion modules are embedded within the wing structure and only a hydrogen storage is removable. It is also known from the prior art to have propulsion modules wherein a wing structure is built around the modules with merged fairings.

WO 2020/003181 A1 discloses a pod for moving a vehicle and also provides a network of interchangeable pods. The pod includes an energy storage and powering machine and a nacelle. The nacelle includes an enclosure for surrounding the energy storage and powering machine and a joining structure for attaching the enclosure to the vehicle. The energy storage and the powering machine include a power generation module, a propulsion module, and an electronics module. The propulsion module includes an electric motor with a propeller module. The electronics module is provided for activating the power generation module to provide electrical energy to the electric motor, wherein the electric motor actuates the propeller module for moving the vehicle.

WO 2020/060488 A1 discloses an autonomous refuelling vehicle for a hydrogen-electric aircraft, which includes two or more wings. The wings are provided with one or more removable electric propulsion pods. The autonomous refuelling vehicle includes a hydrogen refuelling module adapted to connect to the propulsion pods and to a hydrogen source. The autonomous refuelling vehicle includes also includes a propulsion pod handling device, which is adapted to remove the propulsion pod from the wings and to position the propulsion pods on the hydrogen refuelling module such that the propulsion pods are connected to the hydrogen refuelling module. The autonomous refuelling vehicle is also adapted to autonomously move itself to the hydrogen source to allow the hydrogen refuelling module to removably connect to the hydrogen source for refuelling of the propulsion pods.

DE 20 2016 006 522 U1 discloses an electric paraglider which is characterized by the fact that it is electrically powered, that one (or more) electric motors with pusher propellers are located behind the pilot's back, that the battery is located in front of the harness carabiner, that the motor and battery are connected via rigid levers mounted on the carabiner of the harness are firmly connected, that the levers with motor and battery have a low center of gravity and that the motor is aligned horizontally by gravity during take-off and flight.

The battery and a controller can be jettisoned in flight.

WO 2019 /241581 A1 discloses an aircraft that has a frame, at least one electrically-powered propulsion unit providing motive power for levitation and translation of the aircraft, at least one pod comprising a battery, mounted by a physical interface to the frame, the physical interface operable to detach and jettison the at last one pod, and comprising electrical connectors coupling the battery in the mounted pod to the at least one electrically-powered propulsion unit, and control circuitry operable to manage power from the battery to the electrically-powered propulsion unit, and to jettison the pod.

FR 3 097 201 A1 discloses an aircraft with a thrust control system, a wing with a location and a structure with second fastening systems and a second connection means and for each wing, at least one autonomous propeller propulsion system. The autonomous system comprises a chassis with first fixing systems which cooperate with the second fixing systems, a fuel cell, an electric motor with an output shaft, a motor shaft driven in rotation by said output shaft, a propeller fixed on the engine shaft, a controller, a hydrogen inlet pipe and an air inlet pipe, a set of auxiliary equipment, and a first connection means linked with the controller and connected with the second connecting means. Such an aircraft can therefore embark different autonomous systems and its architecture is modular.

US 2008/261084 A1 discloses that a fuel cell may be used to supplement power sources for aircraft equipment. A fuel cell to provide electrical power in an aircraft may include a replaceable fuel source, an information output, and a power output to output power to a line replaceable unit of the aircraft. A method of supplementing electrical power in an aircraft may include providing a fuel cell in the aircraft, the fuel cell comprising a replaceable fuel cartridge and a replaceable by-product cartridge, and supplementing an electrical power system of the aircraft with power generated by the fuel cell by outputting power.

It is the **object** of the present invention to at least partially overcome the problems associated with the prior art. It is a particular object of the present invention to provide a hydrogen-fuelled, electrically driven aircraft of the above-described type exhibiting an improved operational safety.

The object is achieved by the subject-matter of the independent claims. Advantageous embodiments can be found, e.g., in the dependent claims and/or in the description.

The object is achieved by an aircraft propulsion module, comprising at least
- a hydrogen storage system,
- at least one electrochemical converter connected to the hydrogen storage system, wherein the at least one electrochemical converter is adapted to convert hydrogen supplied from the hydrogen storage system into electric energy, and
- at least one electric motor electrically connected to the at least one electrochemical converter, wherein the electric motor is adapted to generate thrust;
   wherein
- the propulsion module comprises at least one separation means adapted to separate at least one component of the propulsion module from (the rest of) the propulsion module, wherein at least one separable component is tethered to the (remaining) propulsion module, even after removal, and wherein the at least one separable component comprises or is the at least one electrochemical converter, at least one electric energy storage unit, and/or the at least one electric motor.

This gives the advantage that, if a separable component becomes inoperable, e.g., by fire or leakage, the cause of inoperation will not propagate to the other components. This, in turn, improves operational safety, in particular during a flight of the aircraft.

The tethering gives the advantage that the separated component may be retrieved for repair and/or safe disposal more easily compared to full removal. This is, e.g., applicable for components being separated from the first part while the rest of the first part, including its fairing, remains at the aircraft, as well as for the separation of the whole first part (including its fairing).

In general, the removable propulsion module provides an independent, autonomous, and removable part ("module") for thrust generation which, in principle, can be adapted on any aircraft. In particular, the propulsion module is not embedded in the wing or the fuselage of the aircraft but can be added to the aircraft structure, e.g., a wing, by means of a simple fastening interface. In particular, the removable propulsion module comprises all means for aircraft propulsion and only needs to be mechanically attached to the aircraft (e.g., by at least one fastening means) and, potentially, can be brought in data communication with the aircraft (e.g., by being equipped with a wired and/or a wireless communication interface) to receive data for its operation and potentially to feed back status data like a fuel level, possible defects, etc.

The hydrogen storage system may be adapted to store gaseous, liquid and/or solid hydrogen. The hydrogen storage system may comprise at least one hydrogen storage unit for physically storing hydrogen, e.g., a hydrogen tank for storing gaseous and/or liquid hydrogen, a dedicated material (e.g., metal hydride, porous carbon, etc.) for chemical or physical solid hydrogen storage, etc. The hydrogen storage system may further comprise at least one piping network dedicated to supply the at least one electrochemical converter with hydrogen coming from the hydrogen storage unit and/or at least one piping network which allows for external hydrogen refuelling.

In an embodiment, the electrochemical converter comprises at least one fuel cell.

The electric motor is supplied with electric energy from the electrochemical converter. In an embodiment, the electric motor is connected to and thus drives at least one propeller or at least one ducted fan, or even other propulsion means.

It is an embodiment that the propulsion module comprises at least one further means ("electric load") using or storing the electric energy generated by the electrochemical converter. Such an electric load may, for example, include at least one further electric motor (e.g., for moving retractable vortex generators), at least one electric actuator of the separation means (which may also be an electric motor), at least one electric or electronic control means, at least one voltage / current converter, at least one valve, at least one electric switch, at least one lamp, etc. It is an embodiment that at least one voltage / current converter is a DC/DC converter, an AC/DC converter, and/or a DC/AC converter. The at least one electric or electronic control means may comprise or be at least one control unit adapted to control operation of at least one of the components of the propulsion module, especially an energy, power, and/or torque management unit, etc. The at least one electric or electronic control means may comprise a microcontroller, ASIC, FPGA, and/or a data communication interface, e.g., an ethernet interface, etc.

It is an embodiment that the propulsion module further comprises at least one electric energy storage unit comprising or being, e.g., at least one rechargeable battery, and/or at least one super capacitor (e.g., a gold cap), etc. This gives the advantage that the at least one electric load of the propulsion module can be supplied with electric energy even if the electrochemical converter generates not enough power (e.g., during peak demand) or is faulty. This also enhances operational safety. In an embodiment, the electric energy storage unit is electrically connected to the electrochemical converter. This gives the advantage that the electric energy storage unit can be charged in flight if the electric power generated by the electrochemical converter is greater than the electric power used by the other components.

Operation of the propulsion module under normal conditions (i.e., without component failure) may comprise at least one operational phase out of the following group of phases:
- "Normal operation": During cruise, descent or taxi, the electrochemical converter is designed to entirely supply the electric motor generating thrust. To this effect, hydrogen is pumped from the storage system to the electrochemical converter and is transformed into electric power by the electrochemical converter.
- "Peak supply": If the power required by the propulsion module, especially the electric motor generating thrust, at a specific flight phase is greater than the maximum power produced by the electrochemical converter, the power difference may be provided by the electric energy storage unit. The electric energy storage unit may be electrically connected in parallel to the electrochemical converter.
- "Recharging": This may be performed on ground or in flight. The electrochemical converter generates electric power, and if the propulsion module needs less power than what the electrochemical converter supplies, the excess electric energy is stored in the electric energy storage unit.
- "Refilling": This only involves the hydrogen storage system. Advantageously, during refilling, the hydrogen storage unit may be separated from the other components so that maintenance tasks on the electric motor and/or on the powertrain equipment, etc. may be performed at the same time as refilling hydrogen.

It is an embodiment that the propulsion module further comprises at least one cooling system. The cooling system may be an active and/or a passive cooling system (or any other form of cooling) and may, in case of an active cooling system, thus also regarded to be an electric load. The cooling system may comprise a heat exchanger.

It is an embodiment that the propulsion module comprises a first part and a second part, each of which comprise a respective fairing. The first part and the second part can be separated from each other, e.g., by actuation of the separation means and/or during maintenance.

The first part comprises the power generating function(s) of the propulsion module. To this effect, the first part comprises at least the at least one electrochemical converter and the at least one electric motor. This gives the advantage that maintenance of components of the first part can be carried out separately from refilling which saves time. The first part may also comprise the electric energy storage unit and the cooling system.

The fairing of the first part gives the advantage that it reduces drag penalty, in particular if the first part is a front part located in front of a wing profile (see also below). Advantageously, the shape of the fairing of the first part is continuous with the wing profile at the contact area, i.e., there are no sharp changes at the transition between the fairing of the first part and the wing profile. Also, the fairing protects the components located in the first part from external damages. In an embodiment, a thrust vector of the propulsion module is aligned with the chord of the wing.

In an embodiment, the first part comprises a support in form of a frame, that is surrounded by the fairing. Fixed / attached to the frame is at least one of the components of the first part, e.g., the at least one electric motor, the at least one electric energy storage unit, and/or the at least one electrochemical converter. Other components of the first part like the cooling system etc. may also be attached / fixed to the frame.

The second part comprises the hydrogen storage system. To this effect, the second part may comprise at least one hydrogen storage unit in its fairing, e.g., a hydrogen tank, and at least one piping network. Its fairing protects the hydrogen storage unit and the at least one piping network from external damages. The fairing also creates a mechanical link between the wing and the hydrogen storage unit without having to modify the hydrogen storage unit. This is particularly advantageous if an off-the-shelf hydrogen storage unit is used.

The first part and second part are connected via at least one fluid connection line (e.g., a feeding pipe / tube for flowing hydrogen fluid from the second part to the first part). Electric connection lines may be connected to different electronics of the first and/or second part of the module, e.g., for monitoring purposes. Mechanical connection lines may be mechanically connected to certain components and may, e.g., be thin metal wires, plastic cables etc. In the following, fluid connection lines (e.g., for supplying hydrogen), electric connection lines (e.g., for supplying voltage, sending electrical signals, and/or data communication) and mechanical connection lines (e.g., of a components separation means) may collectively called connection lines or "channels".

If the electric motor for generating thrust is connected to a front-side propeller, the first part may be a front part and the second part is a rear part positioned aft of the front part. This enables a particularly compact design.

It is an embodiment that the first part is attached to the second part and/or to the wing. It is an embodiment that the second part is attached to the first part and/or to the wing. If the second part is attached to the wing, it may be positioned underneath the wing profile. It is an embodiment that the first part is only attached to the second part, and the second part is only attached to the wing.

It is an embodiment that the at least one separation means being adapted to separate at least one component of the propulsion module comprises separating / detaching this at least one component from the support it is attached to. The actuation of the at least one separation means is remotely controllable, e.g., by a pilot or automatically via a control system. The support may generally be any suitable structure adapted to attach at least one component, in particular the frame of the first part of the propulsion module.

However, there
may also be components that are not separable from the support, e.g., the cooling system.

The support may also be the other part of the propulsion module and or even the wing. This allows separating the first part and/or the second part as a whole. It is an embodiment that the first part and the second part are disconnectable from each other during operation of the propulsion module, e.g., in flight. This gives the advantage that, if one of the two parts is damaged or fails, subsequent damage or failure of the other part can be avoided even in flight. It is an embodiment that the first part and the second part are disconnectable from each other during inoperation of the module, e.g., on ground, e.g., for parts swap, maintenance, or repair.

In an embodiment, the first part is separable from the (rest of the) aircraft by the at least one separation means. The second part may not be separable.

Thus, there exist the possibilities to (a) separate one or more components from one or both or the first part and/or the second part, and/or (b) to separate the first part and/or the second part as a whole, both upon actuation / activation of the at least one separation means. The at least one separation means can be actuated / activated during flight (i.e., taxi, ascend, cruise, descend, etc.).

It is an embodiment that at least one separable (by the at least one separation means) component is removable from the remaining propulsion module after its separation. This gives the advantage that failed or failing components of the propulsion module can be removed from the vicinity of other components thereby enhancing operational safety. Being "removable" may include that a component may be moved outside a fairing of the propulsion module. For example, a component of the first part may be ejected out of the fairing of the first part.

Alternatively, the separated component may stay inside the propulsion module, but in a location that gives enhanced operational safety as compared to the original attachment.

It is an embodiment the separated component is fully removable from the (remaining) propulsion module. This gives the advantage that the separated component will reliably not interfere with the aircraft anymore. For example, the separated component may be ejected out of the propulsion module and then fall to the ground freely. This embodiment is, e.g., applicable for components being separated from the first part while the rest of the first part, including its fairing, remains at the aircraft. This embodiment is also applicable, e.g., for the separation of the whole first part (including its fairing) from the second part and/or the wing which remain at the aircraft.

It is an embodiment that the at least one separable component attached to a tether, the other end of which is attached to a spool. This enables a compact and orderly arrangement of the tether in the propulsion module before separation, and reliable unwinding after separation.

It is an embodiment that the spool-attached end is remotely releasable from the spool can, i.e., can be commanded to be released from the spool, e.g., by the pilot of the aircraft. This gives the advantage that, when flying over a safe dropping zone, the spool-attached end may be released, and the component is dropped to the ground in a known area when it can be retrieved. Furthermore, the aircraft lands safely without risking tangling the tether with the propellers or the wheels during the deceleration phase.

Under normal conditions, such a separable component may, for example, be held by one or more axles (also called pins or bolts) ensuring reliable attachment to the frame. An axle may be retained by a fixation element like an R-clip or a snap ring acting as a mechanical breaker, but other means can also be employed. The snap rings are designed to withstand the loads during normal flight conditions but fly off at higher loads.

To achieve this, in one embodiment, the axles can be pulled or pushed by the separation means. The pulling / pushing load is determined to be greater than the load experienced under normal conditions and so large that the mechanical breaker(s) fail. The axle(s) can then be pulled away, thus separating the involved component from the support. When all attachment points are free, gravity may pull the separated component downward out of its module and/or a mechanical system (e.g., a spring having been held in a compressed or extended state when the component is attached) may push it out of the propulsion module.

In a particular embodiment, at least one separable component is in slidable connection with the support, in particular frame, and held in position at the support by at least one axle leading through respective congruent holes in the component and the support, the at least one axle being held in place by a fixation element attached its free end section, and at least one separation means being adapted to remove the at least one axle out of the respective holes against resistance from the respective fixation element, e.g., by pushing or pulling the axle along its longitudinal axis.

That a component is in slidable connection with the support, may in particular mean that without being held in place by the axle (e.g., because it has been removed by the separation means), the separated component can slide along the support but cannot be lifted from the support. In an embodiment, the component can slide down the support driven / pulled by its weight. The slidable connection may be a rail-and-track connection, in which the component comprises at least one rail which may be inserted into at least one track of the support, or vice versa.

It is an embodiment that a component separated from the frame of the first part falls out of the first part through a hatch located in the fairing, in particular located in an underside of the fairing.

It is an embodiment that at least one separation means comprises an electrically driven actuator which, when actuated (e.g., switched on), exerts a force (e.g., a pulling load) on the at least one axle along its longitudinal axis. The actuator may be an electric motor.

It is an embodiment that at least one separation means comprises a mechanical linkage which, when actuated, exerts a force on the at least one axle along its longitudinal axis. This embodiment is particularly cost-effective and does not consume electricity. The linkage may comprise at least one rod (e.g., acting as a lever) and/or at least one cable. The linkage may be connected to a head of the axle, in particular if the actuated linkage exerts a pulling force on the axle.

The attachment may also be achieved by other fastening elements detachable by a separation means instead of axles, for example a latch that is rotated to free the component and/or a movable rest element on which the component rests so that the component is free to fall when the rest element is moved from under the component,

In an embodiment, the at least one separation means comprises an electrically driven actuator which operates a mechanical linkage connected to at least one axle.

However, the separation means is not limited to the above examples but may be any suitable means, e.g., comprising explosive charges etc.

In an embodiment, the support and the at least one separable component attached thereto comprise congruent holes through which at least one connection line is laid. This allows the transfer of fluid and/or electric signals through the pathway created by the holes. This pathway may be a pathway within the first and/or second parts for connections lines of a specific component. Alternatively, the pathway is a pathway between the first part and the second part. In the latter case, the "at least one separable component" may, e.g., be the first part and the support be provided by the second part. When the at least one component (e.g., at least one component of the first part or the first part itself) is separated, the edges of the two holes create a shearing force that shears apart or cuts the at least one connection line running through them. This gives the advantage that separation of the at least one component is not hindered by remaining connection lines.

It is an embodiment that at least one of the holes comprises a cutting edge, e.g., an edge or edge section that is sharp, in particular shaped as a blade. This greatly enhances the ability to sever the at least one connection line laid through both holes. The cutting edge is located such that is cuts through the connection lines when the support and the component close the hole after separation, thus splitting them. It is possible that only one of the holes has a cutting edge. In another variant, both holes have a respective cutting edge, wherein the cutting edges are facing each other over the hole(s).

It is an embodiment that at least one of the holes is an elongated hole. This gives the advantage that the cutting can be made even more effective because of the potentially higher speed / impulse of the moving component at the connection line(s) after separation. In an embodiment, both holes have an elongated form.

To facilitate cutting / splitting of the connection lines further, it is an embodiment that at least one cutting edge is inclined, in particular in the manner of a "Guillotine". Having an inclined edge advantageously concentrates the shear load on one specific side of the connection line(s) to be cut, increasing local stress, and facilitating the cutting.

The object is also achieved by an aircraft, comprising at least one of the aircraft propulsion modules as described above. The aircraft may be embodied in analogy to the module, and vice versa.

It is an embodiment that at least one of the aircraft propulsion modules is attached to a respective wing of the aircraft.

It is an embodiment that the aircraft comprises at least three aircraft propulsion modules per wing.

The object is also achieved by a method for operating a propulsion module as described above, in which, during operation of the propulsion module, at least one separation means is actuated, by which actuation at least one component of the propulsion module is separated from the remaining propulsion module and then falls from the remaining propulsion module. The method may be embodied in analogy to the aircraft and the propulsion module, and vice versa.

For example, the component may fall from the remaining propulsion module only due to gravitational pull, or the gravitational pull may be assisted or enabled by mechanical force, e.g., a spring force.

The above-described features and advantages of the invention as well as their kind of implementation will now be schematically described in more detail by at least one embodiment in the context of one or more figures.
- Fig.1: shows a cross-sectional side view of a propulsion module attached to a wing of an aircraft;
- Fig.2: shows a cross-sectional side view on a cut-out of a component of the propulsion module attached to a frame of the propulsion module by an axle according to a first embodiment using an R-clip;
- Fig.3: shows a cross-sectional side view on a cut-out of a component of the propulsion module and a frame of the propulsion module according to the second embodiment before attachment;
- Fig.4: shows a cross-sectional side view on a cut-out of the second embodiment with the component of the propulsion module attached to the frame of the propulsion module before actuation of a separation means;
- Fig.5: shows a cross-sectional side view on a cut-out of the second embodiment after actuation of the separation means but with the component of the propulsion module still attached to the frame;
- Fig.6: shows a cross-sectional side view on a cut-out of the second embodiment with the component of the propulsion module separated from the frame;
- Fig.7: shows a cross-sectional top view on a cut-out of possible shapes of a component of the propulsion module and a frame of the propulsion module at their contact area;
- Fig.8: shows a cross-sectional top view on a cut-out of other possible shapes of a component of the propulsion module and a frame of the propulsion module at their contact area;
- Fig.9: shows a cross-sectional side view of a wing and a propulsion module with a battery attached to a frame;
- Fig.10: shows a cross-sectional side view of the wing and propulsion module of Fig.9 with the battery separated from the frame in an earlier phase of separation;
- Fig.11: shows a cross-sectional side view of the wing and propulsion module of Fig.9 with the battery separated from the frame in a later phase of separation;
- Fig.12: shows an oblique view on a cut-out of a frame of the propulsion module 1 having an elongated or slotted hole;
- Fig.13: shows an oblique view on a cut-out of a separable component of the propulsion module 1 having an elongated or slotted hole;
- Fig.14: shows a cross-sectional side view on a cut-out of the frame of Fig.12 and the component of Fig.13 attached to it with connection lines running through both parts;
- Fig.15: shows a cross-sectional side view on a cut-out of the frame and the component of Fig.14 in an earlier phase of separation;
- Fig.16: shows a cross-sectional side view on a cut-out of the frame and the component of Fig.14 in a later phase of separation;
- Fig.17: shows a simplified cross-sectional side view of the propulsion module attached to the wing of the aircraft of Fig.1;
- Fig.18: shows a view similar to Fig.17 with a front part of the propulsion module in an earlier stage of separation; and
- Fig.19: shows a view similar to Fig.17 with a front part of the propulsion module in a later stage of separation.

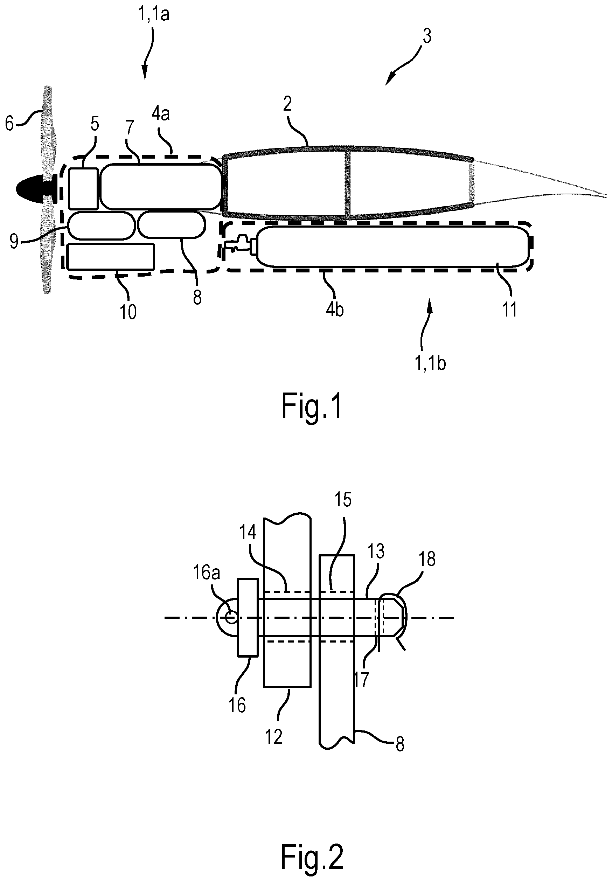

**Fig.1** shows a cross-sectional side view of a propulsion module 1 attached to a wing 2 of an aircraft 3. To reduce costs and maintenance procedures, the propulsion module 1 is divided in several parts, namely here a first ("front") part 1a und a second ("rear") part 1b. In the now described embodiment, the front part 1a, representing the power generating and thrust part, is only attached to the rear part 1b which, in turn, is attached to the wing 2.

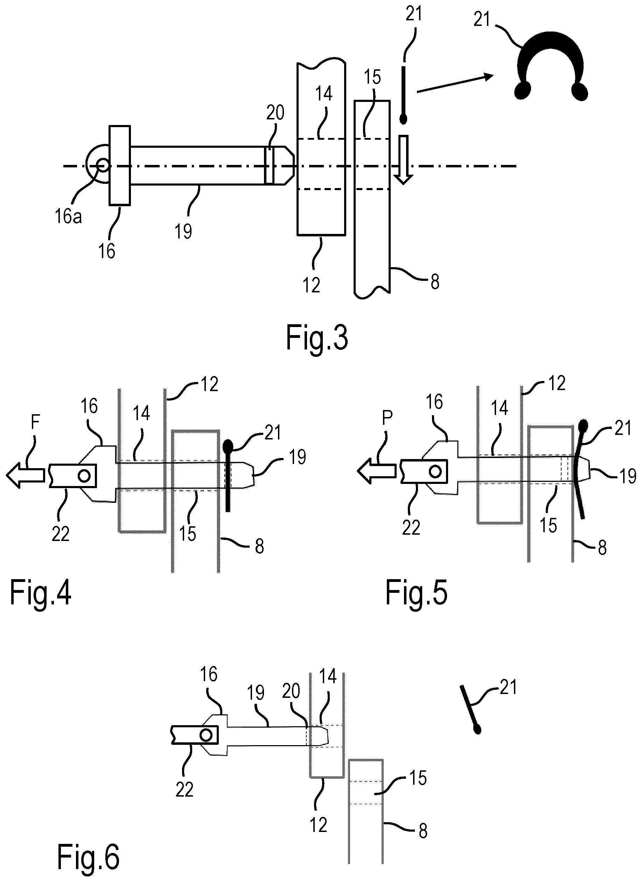

The front part 1a comprises a frame 12 (see Fig.3 to Fig.8) surrounded by a fairing 4a to reduce drag penalty. Fixed / attached to the frame are an electric motor 5 that drives a propeller 6, an electrochemical converter in form of at least one fuel cell 7, an electric energy storage unit in form of a battery 8, a DC/DC converter 9 for converting the DC voltage / current provided by the fuel cell 7 and/or the battery 8 into voltage / current for operating the electric motor 5, and a cooling system comprising a heat exchanger 10. Other components may also be fixed to the frame.

The aft or rear part 1b, which may be placed underneath the wing 2, as shown, hosts a hydrogen storage system comprising a hydrogen tank 11 in a fairing 4b. This fairing 4b protects the hydrogen storage system from external damages. It also creates a mechanical link between the wing 2 and the storage system without having to modify the storage system. This is particularly advantageous if an off-the-shelf storage hydrogen tank 11 is used.

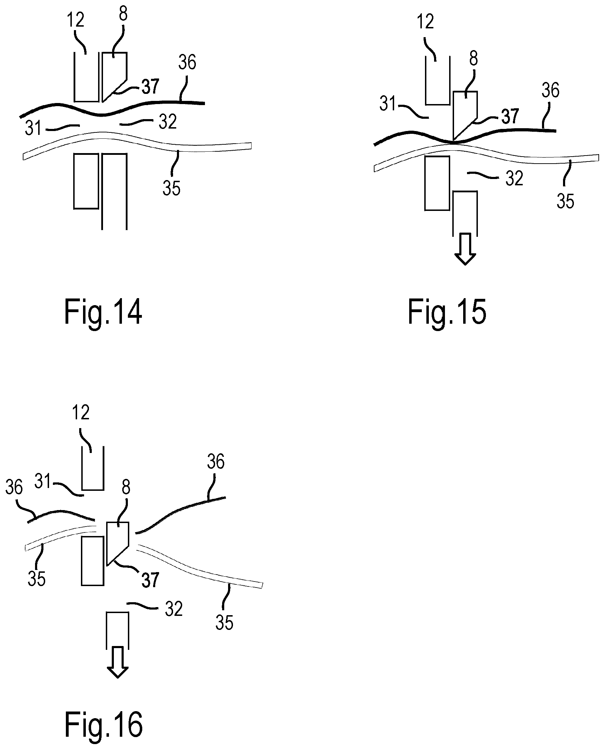

Both parts 1a and 1b are connected via at least one fluid connection line 35 exchanging hydrogen between the second part 1b and the first part 1a and via at least one electric connection line 36, see Fig.14 to Fig.19 below).

Operation of the propulsion module 1 may comprise at least one out of the group comprising the following four operational phases or states:
- "Normal operation": such as, without loss of generality, cruise and/or descent and/or taxi. The fuel cell(s) 7 are designed / dimensioned to fully supply the electric motor 5 with electric energy. The electric energy is generated by the fuel cell 7 based on transformation from hydrogen which is stored in the hydrogen tank 11;
- "Peak supply": if the electric power required by the propulsion module 1 at a specific flight phase is greater than the maximum power produced by the fuel cell 7, the difference may be provided by the battery 8;
- "Recharging": this phase may be performed on ground or in flight. If the propulsion module 1, in particular the electric motor 5, needs less electric power than what the fuel cell 7 supplies, the excess electric energy is stored in the battery 8;
- "Refilling": this phase only involves the storage system. Advantageously, during refilling, the rear part 1b may be separated from the front part so that maintenance tasks on the components of the front part 1a may be performed at the same time.

The connection / contact area between the first part 1a of the propulsion module 1 and the wing 2 should be as small as possible to reduce the frontal area of the propulsion module 1 and thus the drag penalty. In one embodiment, notches may be provided in the wing 2 to access the wing spar, which makes attachment easier. This embeds the propulsion module 1 in the wing 2, therefore reducing the frontal connection / contact area.

As shown in Fig.2, during normal conditions, a component of the front part 1a (here in one example shown as the battery 8) is attached to the frame 12 by one or more axles 13 that are stuck through congruent through-holes 14 and 15 of the frame 12 and the battery 8, respectively. On one side, a head 16 of the axle 13 is wider than the hole 14 and thus will not get inserted into hole 14. The head 16 may be equipped with a through hole 16a.

On its other side, outside the hole 15, when having been stuck through both holes 14, 15, the axle 13 comprises a through hole 17 into which a pin or - as shown - an R-clip 18 etc. can be stuck. Thus, the head 16 on one side and the R-clip 18 on the other side retain the axle 13 in both holes 14, 15. Therefore, the battery 8 is held in position at the frame 12 as long as the axle 13 is not removed.

Under normal conditions, such a component like the battery 8 etc. may be held by several axles 13 making sure that it is securely attached to the frame 12.

Fig.3 shows another possibility to attach the battery 8 to the frame 12 in an analogous view to Fig.2. Here, shown in a not attached state, an axle 19 comprises a ring-shaped notch 20 at its front section, into which a snap ring 21 can be snapped on after insertion of the axle 19 through the holes 14, 15, as indicated by the vertical arrow. The snap ring 21, also shown in frontal view, is designed to withstand the loads during normal flight conditions but will fly off at higher loads.

However, if a component of the propulsion module 1, in particular a component of the front part 1a, has degraded or is faulty, it may be advantageous from a safety point of view to move away / separate this faulty component before it may damage other components. When such a degraded condition or an emergency situation regarding such a component (e.g., the battery 8) is noticed by the pilot or automatically via a control system, the present invention proposes the possibility to separate this component from the rest of the propulsion module 1, in particular front part 1a.

To this effect, the propulsion module 1 comprises at least one separation means 22 (see Fig.4 to Fig.6) adapted to separate this component from the frame 12. The weight of the component then causes it to plunge.

Separating or detaching one or more components from the rest of the (remaining) propulsion module 1 may also be called "component isolation", and the respective mechanism a "component isolation mechanism", in particular, if the separated component is removed out of a fairing. The aspect of the separation that involves disconnecting / severing connection lines or "channels" like fluid connection lines, electric connection lines and/or mechanical connection lines etc. may be called "disconnection" or "disconnecting technique".

In the above-described embodiments, the separation of the battery 8 from the frame 12 amounts to a "component isolation". The component isolation may be realized by, e.g., the separation means 22 comprising a remotely actuatable actuator and/or a linkage connected to the head 16 by the hole 16a.

When the actuator is actuated (e.g., by switching on an electric motor) and/or when the linkage is actuated (e.g., a linkage leading into the cabin is mechanically manipulated by the pilot), the separation means 22 pulls at the head 16 of the axle 19 in longitudinal axis of the axle 19, as indicated by the pulling load F in Fig.4.

The pulling load F is greater than the load experienced under normal conditions. This in turn, leads the R-clip 18, the snap ring 21, or any other element or system that acts as mechanical breaker(s), to fail. For example, the snap ring 21 may first bend (as shown in Fig.5) and then fly off the axle 19 (as shown in Fig.6), the R-clip 18 may break or may be deformed so greatly that it can be pulled through the holes 14, 15, etc. The axles 13, 19 are then pulled out of the holes 14, 15, thus separating the battery 8 from the frame 12 at this attachment point. When all the attachment points are free, gravity may pull the released battery 8 downward (as shown in Fig.6). It may then fall further out of the front part 1a (e.g., through a hatch). Alternatively or additionally, it may be pushed out of the front part 1a by a mechanical system, e.g., comprising one or more compressed and/or extended springs.

Of course, instead of being pulled out of the holes 14, 15, the axle(s) 13, 19 may be pushed out of the holes 14, 15 by putting pressure on its free end. Also, the axle(s) 13, 19 may be stuck in the holes 14, 15 in the reverse direction, i.e., the head 16 being positioned at the component to be separated.

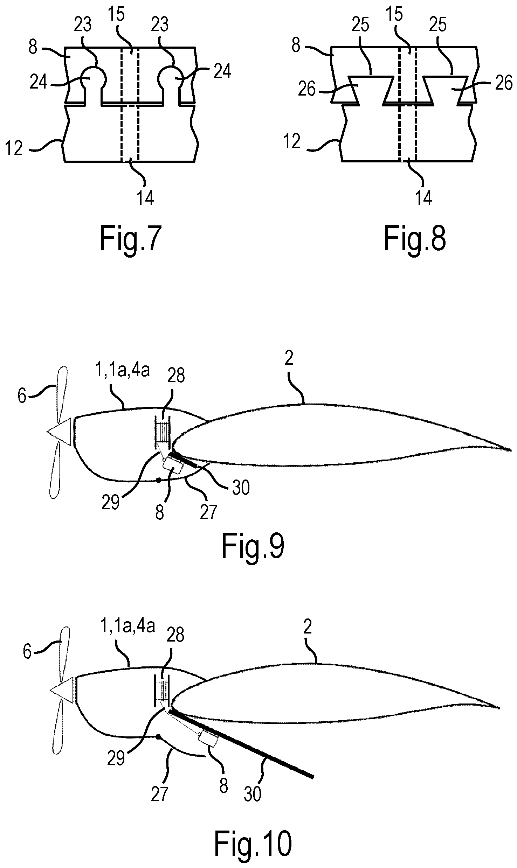

Fig.7 shows a cross-sectional top view of possible shapes of a component of the propulsion module 1 (e.g., the battery 8) and a frame 12 of the propulsion module 1 at their contact area. Also, the holes 14 and 15 are shown. The battery 8 comprises two parallel tracks 23 into which respective rails 24 of the frame 12 are inserted. The tracks 23 and rails 24 have the same basic shape that widens inside the battery 8. Thus, the battery 8 can only the moved relative to the frame 12 along the tracks 23 (i.e., along the contact area) but cannot be lifted from the frame 12 (i.e., perpendicular to the contact area). When the axle 13 or 19 is inserted into the holes 14, 15, it prevents relative movement of the battery 8 along the frame 12. This arrangement is particularly advantageous because it prevents forces to be exerted along the axle under normal operating conditions and thus prevents the axle 13 or 19 to be dislodged without actuating the separation means 22. To be able to separate the battery 8 from the frame 12 due to the weight of the battery 8, the tracks 23 are open at least at the top.

Fig.8 shows a cross-sectional top view of other possible shapes of a component of the propulsion module 1 (e.g., the battery 8) and a frame 12 of the propulsion module 1 at their contact area. The shown arrangement is similar to Fig.7, with the cross-sectional shape of the tracks 25 and the rails 26 now being trapezoidal.

Of course, the tracks 23 and rails 24 as well as the tracks 25 and rails 26 can also be of reversed arrangements, e.g., with the tracks 23 and 25 in the frame 12 and the rails 24 and 26 in the battery 8. In this case, to be able to separate the battery 8 from the frame 12 due to the weight of the battery 8, tracks 23, 25 are open at least at the bottom.

In an embodiment, the tracks 23 and rails 24 and/or the tracks 25 and rails 26 are aligned in an - at least substantially - vertical direction. This gives the advantage that the battery 8 can slide down along the frame 12 by gravitational pull and/or moved by a spring force when the axle(s) 13, 19 are removed.

Fig.9 shows a cross-sectional side view of the wing 2 and front part 1a of the propulsion module 1 with the battery 8 attached to the frame 12. The rear part 1b is not shown.

The underside of the fairing 4a of the front part 1a comprises a hatch 27 that opens to release the detached / separated battery 8 out of the fairing 4a. Without further measures, the battery 8, when released from the fairing 4a, will freely fall to the ground.

In an advantageous embodiment, the battery 8 is tethered to a spool 28 positioned in the front part 1a via a mechanical cable / tether 29. This avoids uncontrolled fall of the battery 8 and potential injury or damage from its free fall. In particular, one end of the tether 29 is attached to the battery 8 and the other end is attached to the spool 28. When the battery 8 is attached to the frame, the tether 29 is wound up on the spool 28.

Optionally, the battery 8 is slidably connected to an extendable pole 30. The pole 30 gives the advantage that it prevents the battery 8 from hitting the front part 1a, the rear part 1b or the wing 2, since it is adapted to guide the battery 8 during the initial phase of its fall. When the battery 8 is attached to the frame, the pole 30 is in a retracted state and therefore so short, that it fits into the fairing 4a.

**Fig.10** shows a cross-sectional side view analogous to Fig.9 with the battery 8 having been separated from the frame (e.g., caused by actuation of the separation means 22) in the initial phase of separation in which the hatch 27 has been opened and the battery 8 slides down the now extended pole 30. While sliding down, the tether 29 unwinds from the spool 28.

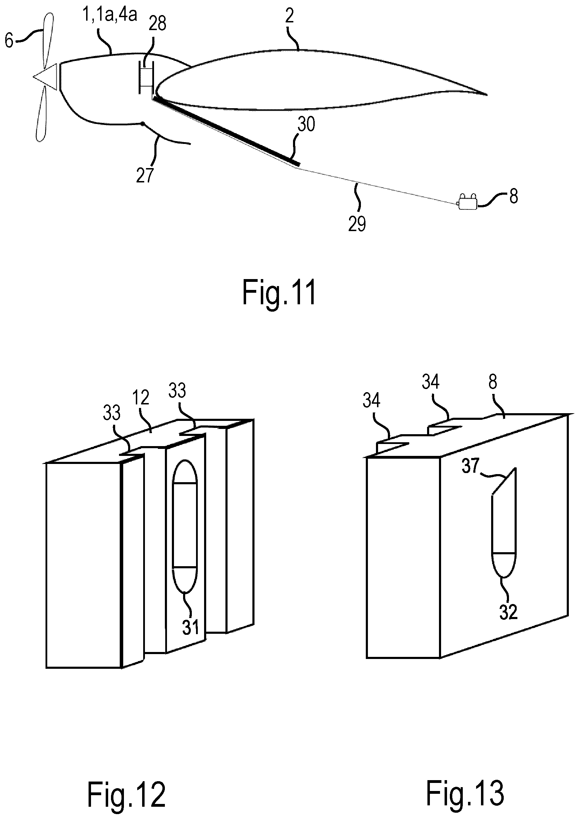

**Fig.11** shows cross-sectional side view analogous to Fig.10 in a later phase of the separation in which the battery 8 has slid down the pole 30, has detached from the pole 30 and now hangs by the unwound tether 29 at a safe distance from any structural part of the aircraft 3.

When flying close to an airport and/or over a safe dropping zone, the spool-attached end of the tether 29 may be released on command, and the battery 8 then drops to the ground in a known drop area. The aircraft 3 lands safely without risking tangling the tether 29 in the propellers 6 or the wheels during the deceleration phase. Depending on the drop area, the battery 8 and the tether 29 can be retrieved.

**Fig.12** shows an oblique view on a cut-out of a frame 12 of the propulsion module 1 having a hole 31 that is elongated or slotted in the vertical direction. This hole 31 can be present in addition to one or more of the holes 14 described above.

The frame 12 is further equipped with parallel tracks 33, e.g., in form of the tracks 23 or 25 described above, that are shown to be vertically aligned.

**Fig.13** shows an oblique view on a cut-out of a separable component (here: of a battery 8, as an example) of the propulsion module 1 having a hole 32 that is also elongated or slotted in the vertical direction. This hole 32 can be present in addition to one or more of the holes 15 described above.

The battery 8 is further equipped with parallel rails 34, e.g., in form of the tracks 24 or 26 described above, that are shown to be vertically aligned and fit into the tracks 33 of the frame 12. If not held in position by the at least one axle 13 or 19, the battery 8 slides down the frame 12 in the vertical direction along the tracks 33.

Through the holes 31 and 32 may be passed / laid one or more connection channels / connection lines 35, 36 (see, e.g., Fig.14 to Fig.16) in form of at least one fluid connection line 35 (in form of a tube, for example) and/or at least one electric connection line 36 (a data cable and/or a power cord, for example) and/or at least one mechanical line (a thin metallic wire or a plastic cable, for example).

Generally, when a component of the propulsion module 1, in particular of the front part 1a, is connected to connection lines 35, 36, separation of the component from the frame 12 may not be sufficient to also separate the connection line(s) 35, 36, leading to a failure to fully separate, and/or the separation leads to excessive pulling loads on at least one connection line(s) 35, 36. One solution to this problem is to provide the connection line(s) 35 and/or 36 with a mechanically weak connection interface and/or with a predetermined breaking point. This, however, may also negatively affect the stability and reliability under normal operating conditions, in particular, if the connection line is a pressurized fluid connection line 35. To overcome this problem, the following embodiment is proposed that amounts to a disconnecting technique:
At least one of the elongated holes (here: hole 32) comprises a cutting edge 37, i.e., an edge that, when the battery 8 drops down after separation from the frame 12, cuts through the at least one connection line 35, 36, as seen in the sequence shown in **Fig.14, Fig.15,** and **Fig.16****.** In case of hole 32, the cutting edge 37 corresponds to the upper section of the hole 32. To cut particularly effectively the at least one connection line 35, 36, the cutting edge 37 is formed as an inclined line in the manner of a Guillotine. Since the hole 32 is elongated, the cutting edge 37 has a higher speed / impulse and shear force when cutting the at least one connection line 35, 36 compared to a smaller round hole.

Alternatively or additionally, the lower section of hole 31 may be a cutting edge.

The combined principles of the component isolation mechanism shown in Fig.2 to Fig.8 and the disconnecting technique shown in Fig.14 to Fig.16 may not only be applied to the separation of components from the front part 1a but also to the separation of the whole front part 1a from the rear part 1b and/or from the wing 2:

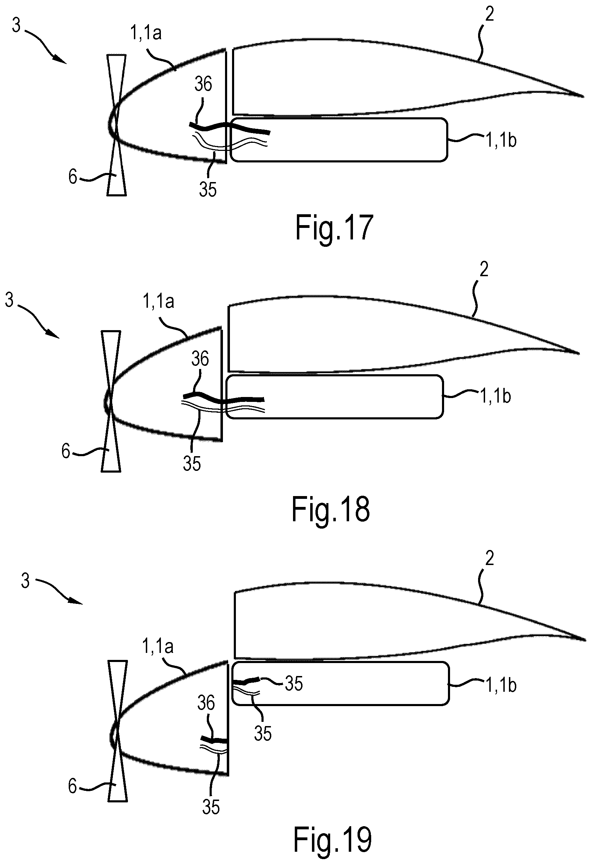

**Fig.17** shows a simplified cross-sectional side view of the aircraft 3 of Fig.1 with the propulsion module 1 attached to the wing 2. In particular, the front part 1a is still attached to the wing 2 and/or to the rear part 1b, e.g., by use of axles 13 or 19 in analogy to Fig.2 to Fig.8. At least one fluid connection line 35 in form, e.g., of a flexible plastic tube runs between the front part 1a and the rear part 1b, e.g., for supplying the fuel cell(s) 7 of the front part 1a with hydrogen stored in the hydrogen tank 11 of the rear part 1b. Additionally, at least one electric connection line 36 in form of an electric cable may run between the front part 1a and the rear part 1b, e.g., to supply at least one valve (not shown) of the hydrogen supply system with electric energy generated by the fuel cell(s) 7. These connection lines 35, 36 run through holes of the front part 1a and the rear part 1b in a manner analogous to Fig.14 to Fig.16.
**Fig.18** shows a view similar to Fig.17 with the front part 1a of the propulsion module 1 in an earlier stage of separation analogous to Fig.15 after the front part 1a has been separated from the rear part 1b and/or the wing 2 by operation of the separation means 22. The front part 1a drops down and will cut the connection lines 35, 36.
**Fig.19** shows a view similar to Fig.17 with a front part 1a of the propulsion module 1 in a later stage of separation after the connection lines 35, 36 have been cut. The front part 1a may be in free fall or may be tethered to the rear part 1b, e.g., in analogy to Fig.9 to Fig.11.

## Claims

1. An aircraft propulsion module (1) comprising
- a hydrogen storage system (11),
- at least one electrochemical converter (7) connected to the hydrogen storage system (11), wherein the at least one electrochemical converter (7) is adapted to convert hydrogen supplied from the hydrogen storage system (11) into electric energy, and
- at least one electric motor (5) electrically connected to the at least one electrochemical converter (7), wherein the electric motor (5) is adapted to generate thrust;
wherein
- the propulsion module (1) comprises at least one separation means adapted to separate at least one component (1a, 5, 7, 8) of the propulsion module (1) from the propulsion module (1), and wherein
- at least one component (8) of the at least one separable component (8) is tethered to the propulsion module (1) after removal.

2. The aircraft propulsion module (1) according to claim 1, wherein at least one separable component (8) is removable from the propulsion module (1) after separation.

3. The aircraft propulsion module (1) according to any of the preceding claims, wherein the separable component is tethered to one end of a tether (29), the other end of the tether (29) being connected to a spool (28) of the aircraft propulsion module (1).

4. The aircraft propulsion module (1) according to claim 3, wherein the end of the tether (29) connected to the spool (28) is remotely releasable from the spool (28).

5. The aircraft propulsion module (1) according to any of the preceding claims, wherein the at least one separable component (1a, 5, 7, 8) comprises or is the at least one electrochemical converter (7), at least one electric energy storage unit (8), and/or the at least one electric motor (5).

6. The aircraft propulsion module (1) according to any of the preceding claims, wherein
- at least one separable component (8) is in slidable connection with a support (12) and held in position at the support (12) by at least one axle (13; 19) leading through respective holes (14, 15) in the component (8) and the support (12),
- the at least one axle (13, 19) is held in place by a fixation element (18; 21) attached the free end section of the axle (13; 19), and
- at least one separation means (22) is adapted to remove the at least one axle (13; 19) out of the respective holes (14, 15) against resistance from the respective fixation element (18; 21).

7. The aircraft propulsion module (1) according to claim 6, wherein the slidable connection is such that, when the at least one axle (13; 19) is removed, the separated component slides down the support (12) pulled by its weight, and then falls out of a fairing (4a) of the propulsion module (1).

8. The aircraft propulsion module (1) according to any of the claims 6 to 7, wherein at least one separation means (22) comprises an electrically driven actuator and/ or a mechanical linkage which, when operated, exerts a force (F) on the at least one axle (13; 19) along its longitudinal axis.

9. The aircraft propulsion module (1) according to any of the claims 6 to 7, wherein
- the at least one separable component (8) comprises at least one elongated hole (32) and/or the support (12) comprises at least one elongated hole (31), through which, when the component (8) is attached to the support (12), at least one connection line (35, 36) is laid, and wherein
- at least one of the holes (31, 32) comprises a cutting edge (37), in particular inclined cutting edge (37).

10. The aircraft propulsion module (1) according to any of the claims 5 to 9, wherein the at least one electrochemical converter (7), the at least one electric energy storage unit (8), and the at least one electric motor (5) are located in a first part (1a), in particular front part (1a), of the propulsion module (1a), wherein the hydrogen storage system (11) is located in a second part (1b), in particular rear part (1a), of the propulsion module (1), and wherein the first part (1a) is separable by the at least one separation means (22).

11. An aircraft (3), comprising at least one aircraft propulsion module (1) according to any of the preceding claims.

12. A method for operating a propulsion module (1) according to any of the claims 1 to 10, in which, during operation of the propulsion module (1), at least one separation means (22) is actuated, by which actuation at least one component (8) of the propulsion module (1) is separated from the remaining propulsion module (12) and then falls from the remaining propulsion module (1).

## Patentansprüche

1. Flugzeugantriebsmodul (1), das Folgendes umfasst:
- ein Wasserstoffspeicherungssystem (11),
- zumindest einen elektrochemischen Wandler (7), verbunden mit dem Wasserstoffspeicherungssystem (11), wobei der zumindest eine elektrochemische Wandler (7) dazu eingerichtet ist, von dem Wasserstoffspeicherungssystem (11) zugeführten Wasserstoff in elektrische Energie umzuwandeln, und
- zumindest einen Elektromotor (5), der elektrisch mit dem zumindest einen elektrochemischen Wandler (7) verbunden ist, wobei der Elektromotor (5) dazu eingerichtet ist, Schub zu erzeugen;
wobei
- das Antriebsmodul (1) zumindest ein Abtrennmittel umfasst, das dazu eingerichtet ist, zumindest eine Komponente (1a, 5, 7, 8) des Antriebsmoduls (1) von dem Antriebsmodul (1) abzutrennen, und wobei
- zumindest eine Komponente (8) der zumindest einen abtrennbaren Komponente (8) nach der Entfernung am Antriebsmodul (1) angebunden ist.

2. Flugzeugantriebsmodul (1) nach Anspruch 1, wobei nach der Abtrennung zumindest eine abtrennbare Komponente (8) vom Antriebsmodul (1) entfernbar ist.

3. Flugzeugantriebsmodul (1) nach einem der vorhergehenden Ansprüche, wobei die abtrennbare Komponente an einem Ende einer Leine (29) angebunden ist, wobei das andere Ende der Leine (29) mit einer Spule (28) des Flugzeugantriebsmoduls (1) verbunden ist.

4. Flugzeugantriebsmodul (1) nach Anspruch 3, wobei das Ende der Leine (29), das mit der Spule (28) verbunden ist, aus der Ferne von der Spule (28) lösbar ist.

5. Flugzeugantriebsmodul (1) nach einem der vorhergehenden Ansprüche, wobei die zumindest eine abtrennbare Komponente (1a, 5, 7, 8) den zumindest einen elektrochemischen Wandler (7), die zumindest eine elektrische Energiespeicherungseinheit (8) und/oder den zumindest einen Elektromotor (5) umfasst oder dieser bzw. diese ist.

6. Flugzeugantriebsmodul (1) nach einem der vorhergehenden Ansprüche, wobei
- zumindest eine abtrennbare Komponente (8) in gleitbarer Verbindung mit einer Stütze (12) ist und an der Stütze (12) durch zumindest eine Achse (13; 19), die durch entsprechende Löcher (14, 15) in der Komponente (8) und der Stütze (12) führt, in Position gehalten wird,
- die zumindest eine Achse (13, 19) durch ein Fixierungselement (18; 21), das am freien Endabschnitt der Achse (13; 19) befestigt ist, in Position gehalten wird, und
- das zumindest eine Abtrennmittel (22) dazu eingerichtet ist, die zumindest eine Achse (13; 19) gegen den Widerstand des entsprechenden Fixierungselements (18; 21) aus den entsprechenden Löchern (14, 15) zu entfernen.

7. Flugzeugantriebsmodul (1) nach Anspruch 6, wobei die gleitbare Verbindung so ist, dass, wenn die zumindest eine Achse (13; 19) entfernt wird, die abgetrennte Komponente, gezogen durch ihr Gewicht, an der Stütze (12) nach unten gleitet und dann aus einer Verkleidung (4a) des Antriebsmoduls (1) herausfällt.

8. Flugzeugantriebsmodul (1) nach einem der Ansprüche 6 bis 7, wobei zumindest ein Abtrennmittel (22) einen elektrisch angetriebenen Aktuator und/oder ein mechanisches Gestänge umfasst, der bzw. das, wenn betätigt, eine Kraft (F) auf die zumindest eine Achse (13; 19) entlang ihrer Längsachse wirkt.

9. Flugzeugantriebsmodul (1) nach einem der Ansprüche 6 bis 7, wobei
- die zumindest eine abtrennbare Komponente (8) zumindest ein Langloch (32) umfasst und/oder die Stütze (12) zumindest ein Langloch (31) umfasst, durch das, wenn die Komponente (8) an der Stütze (12) befestigt ist, zumindest eine Verbindungsleitung (35, 36) gelegt ist, und wobei
- zumindest eines der Löcher (31, 32) eine Schneidkante (37) umfasst, insbesondere eine geneigte Schneidkante (37).

10. Flugzeugantriebsmodul (1) nach einem der Ansprüche 5 bis 9, wobei der zumindest eine elektrochemische Wandler (7), die zumindest eine elektrische Energiespeicherungseinheit (8) und der zumindest eine Elektromotor (5) in einem ersten Teil (1a), insbesondere einem vorderen Teil (1a), des Antriebsmoduls (1a) befindlich sind, wobei das Wasserstoffspeicherungssystem (11) in einem zweiten Teil (1b), insbesondere einem hinteren Teil (1a), des Antriebsmoduls (1) befindlich ist, und wobei der erste Teil (1a) durch das zumindest eine Abtrennmittel (22) abtrennbar ist.

11. Flugzeug (3), umfassend zumindest ein Flugzeugantriebsmodul (1) nach einem der vorhergehenden Ansprüche.

12. Verfahren zum Betreiben eines Antriebsmoduls (1) nach einem der Ansprüche 1 bis 10, wobei während des Betriebs des Antriebsmoduls (1) zumindest ein Abtrennmittel (22) betätigt wird, durch dessen Betätigung zumindest eine Komponente (8) des Antriebsmoduls (1) vom verbleibenden Antriebsmodul (12) abgetrennt wird und dann vom verbleibenden Antriebsmodul (1) abfällt.

## Revendications

1. Module de propulsion d'aéronef (1) comprenant
- un système de stockage d'hydrogène (11),
- au moins un convertisseur électrochimique (7) relié au système de stockage d'hydrogène (11), dans lequel l'au moins un convertisseur électrochimique (7) est adapté pour convertir de l'hydrogène fourni par le système de stockage d'hydrogène (11) en énergie électrique, et
- au moins un moteur électrique (5) électriquement relié à l'au moins un convertisseur électrochimique (7), dans lequel le moteur électrique (5) est adapté pour générer une poussée ;
dans lequel
- le module de propulsion (1) comprend au moins un moyen de séparation adapté pour séparer au moins un composant (1a, 5, 7, 8) du module de propulsion (1) du module de propulsion (1), et dans lequel
- au moins un composant (8) de l'au moins un composant séparable (8) est attaché au module de propulsion (1) après retrait.

2. Module de propulsion d'aéronef (1) selon la revendication 1, dans lequel au moins un composant séparable (8) peut être retiré du module de propulsion (1) après séparation.

3. Module de propulsion d'aéronef (1) selon l'une quelconque des revendications précédentes, dans lequel le composant séparable est attaché à une extrémité d'une attache (29), l'autre extrémité de l'attache (29) étant reliée à un corps (28) du module de propulsion d'aéronef (1).

4. Module de propulsion d'aéronef (1) selon la revendication 3, dans lequel l'extrémité de l'attache (29) reliée au corps (28) peut être libérée à distance du corps (28).

5. Module de propulsion d'aéronef (1) selon l'une quelconque des revendications précédentes, dans lequel l'au moins un composant séparable (1a, 5, 7, 8) comprend ou est l'au moins un convertisseur électrochimique (7), au moins une unité de stockage d'énergie électrique (8), et/ou l'au moins un moteur électrique (5).

6. Module de propulsion d'aéronef (1) selon l'une quelconque des revendications précédentes, dans lequel
- au moins un composant séparable (8) est en liaison coulissante avec un support (12) et maintenu en position au niveau du support (12) par au moins un essieu (13 ; 19) traversant des trous (14, 15) respectifs dans le composant (8) et le support (12),
- l'au moins un essieu (13, 19) est maintenu en place par un élément de fixation (18 ; 21) fixé à la section d'extrémité libre de l'essieu (13 ; 19), et
- au moins un moyen de séparation (22) est adapté pour retirer l'au moins un essieu (13 ; 19) des trous (14, 15) respectifs en raison de la résistance de l'élément de fixation (18 ; 21) respectif.

7. Module de propulsion d'aéronef (1) selon la revendication 6, dans lequel la liaison coulissante est telle que, lorsque l'au moins un essieu (13 ; 19) est retiré, le composant séparé coulisse vers le bas le long du support (12) tiré par son poids, puis tombe d'un carénage (4a) du module de propulsion (1).

8. Module de propulsion d'aéronef (1) selon l'une quelconque des revendications 6 à 7, dans lequel au moins un moyen de séparation (22) comprend un actionneur entraîné électriquement et/ou une timonerie mécanique qui, lorsqu'elle est actionnée, exerce une force (F) sur l'au moins un essieu (13 ; 19) le long de son axe longitudinal.

9. Module de propulsion d'aéronef (1) selon l'une quelconque des revendications 6 à 7, dans lequel
- l'au moins un composant séparable (8) comprend au moins un trou allongé (32) et/ou le support (12) comprend au moins un trou allongé (31), à travers lequel, lorsque le composant (8) est fixé au support (12), au moins une ligne de connexion (35, 36) est posée, et dans lequel
- au moins l'un des trous (31, 32) comprend un bord de coupe (37), en particulier un bord de coupe (37) incliné.

10. Module de propulsion d'aéronef (1) selon l'une quelconque des revendications 5 à 9, dans lequel l'au moins un convertisseur électrochimique (7), l'au moins une unité de stockage d'énergie électrique (8), et l'au moins un moteur électrique (5) sont situés dans une première partie (1a), en particulier une partie avant (1a), du module de propulsion (1a), dans lequel le système de stockage d'hydrogène (11) est situé dans une seconde partie (1b), en particulier une partie arrière (1a), du module de propulsion (1), et dans lequel la première partie (1a) peut être séparée par l'au moins un moyen de séparation (22).

11. Aéronef (3), comprenant au moins un module de propulsion d'aéronef (1) selon l'une quelconque des revendications précédentes.

12. Procédé de fonctionnement d'un module de propulsion (1) selon l'une quelconque des revendications 1 à 10, dans lequel, pendant le fonctionnement du module de propulsion (1), au moins un moyen de séparation (22) est actionné, grâce auquel actionnement au moins un composant (8) du module de propulsion (1) est séparé du module de propulsion restant (12), puis tombe du module de propulsion restant (1).
